# EUROPÄISCHE PATENTSCHRIFT

(11) **EP 2 919 937 B1**
(45) Veröffentlichungstag und Bekanntmachung des Hinweises auf die Patenterteilung: **09.03.2022**
(21) Anmeldenummer: 13814418.3
(22) Anmeldetag: 07.11.2013
(51) Int. Cl.: B23F 21/00, B23F 5/16

(54) **VERFAHREN ZUR BESTIMMUNG DER FREIFLÄCHENKONTUR EINES WÄLZSCHÄLWERKZEUGES**
METHOD FOR DETERMINING THE FLANK FACE CONTOUR OF A SKIVING TOOL
PROCÉDÉ PERMETTANT DE DÉTERMINER LE CONTOUR DE LA FACE DE DÉPOUILLE D'UN OUTIL DE TAILLAGE EN DÉVELOPPANTE

(30) Priorität: 16.11.2012 DE 102012022439
(43) Veröffentlichungstag der Anmeldung: 23.09.2015
(73) Patentinhaber: Profilator GmbH & Co. KG, 42329 Wuppertal (DE)
(72) Erfinder: SOBCZYK, Marcel, 42653 Solingen (DE)
(74) Vertreter: Grundmann, Dirk
(86) Internationale Anmeldenummer: PCT/DE2013/000653
(87) Internationale Veröffentlichungsnummer: WO 2014/075651

(56) Entgegenhaltungen:
- WO-A1-2012/098002
- DE-A1-102007 015 357
- DE-U1-202011 050 054
- HOBOHM M: "Ein Verfahren entfalted sein Potenzial", WERKSTATT UND BETRIEB, CARL HANSER VERLAG GMBH & CO. KG, DE, Bd. 144, Nr. 12, 31. Dezember 2011 (2011-12-31), Seiten 46-49, XP001571035, ISSN: 0043-2792

## Beschreibung

Die Erfindung betrifft ein Verfahren zur Bestimmung der Freiflächenkontur, insbesondere des Freiwinkels eines messerförmigen Werkzeuges oder Werkzeugzahns eines Werkzeugs zum Wälzschälen von Werkstücken.

Die ersten spanenden Bearbeitungsverfahren der eingangs genannten Art sind aus der DE 243 514 C bekannt. Das Wälzschälen verwendet ein Zahnrad mit stirnseitigen Schneiden als Werkzeug. Anders als beim Stoßen erfolgt die Schneidbewegung, indem über eine windschiefe Anordnung der Achse des Werkzeugs und der Drehachse des Werkstückes durch gegenläufige Drehungen dieser Teile eine Schneidbewegung erzeugt wird. Das Werkzeug durchläuft während des Umlaufens um das Werkstück jeweils Verzahnungen, die es aus dem Werkstück heraus schneidet.

Prinzipiell kann ein Werkstück beim Wälzschälen in einem einzigen Arbeitsgang mit nur einer durchgeführten Vorschubbewegung hergestellt werden. Bei größerem Materialabtrag sind jedoch mehrere Arbeitsgänge sinnvoll, bei denen das schälende Werkzeug hintereinander zwei Vorschubbewegungen mit unterschiedlich großen Schnitttiefen ausführt, wie dies beispielsweise in der DE 10 2008 037 514 A1 beschrieben wird.

Um die Qualität des hergestellten Werkstückes zu verbessern wird in der WO 2012/098 002 A1 vorgeschlagen, dass die werkstückachsenparallelen Komponenten der Vorschubbewegung und der Schneidbewegung einander entgegengerichtet sind. Allerdings soll diese entgegengerichtete Schneidbewegung lediglich zum Glätten einer bereits in wenigstens zwei Arbeitsgängen vorgefertigten Verzahnung benutzt werden.

Die WO 2010/060 733 A1 betrifft eine Wälzschälvorrichtung, bei der eine elektronische Steuereinrichtung für Positionierantriebe der Werkzeugspindel und der Werkstückaufnahme vorgesehen sind, wobei die Steuereinrichtung beim Verzahnen eines grob vorverzahnten oder unverzahnten Rohlings im axialen Vorschub am Ende des Vorschubes eine radiale Austauchbewegung aus dem Werkstück und/oder zu Beginn des Vorschubes eine radiale Eintauchbewegung in das Werkstück überlagert.

Die Druckschrift HOBOHM M: "Ein Verfahren entfaltet sein Potenzial", aus WERKSTATT UND BETRIEB, CARL HANSER VERLAG GMBH & CO. KG, DE, Bd. 144, Nr. 12, 31. Dezember 2011 (2011-12-31), Seiten 46-49, XP001571035, ISSN: 0043-2792 zeigt ein Verfahren zur Bestimmung der Freiflächenkontur, insbesondere des Freiwinkels eines messerförmigen Werkzeuges oder Werkzahnes eines Werkzeuges zum Wälzschälen von Werkstücken, wobei in einem ersten Schritt unter Berücksichtigung eines vorgegebenen oder vorgebbaren Übersetzungsverhältnisses zwischen dem Werkzeug und dem Werkstück, das durch die jeweilige Anzahl der Zähne bestimmt ist, sowie der gewünschten Zahnquerschnittskontur des Werkstückes die Spanflächenkontur des Werkzeuges definiert und der Verlauf der Bahnbewegung der Spanfläche des Werkzeuges beim zerspanenden Wälzschälen errechnet wird.

Gleichgültig, ob das nach dem Stand der Technik bekannte Schälrad als Werkzeug eine zylindrische oder eine konische Kontur besitzt, ergeben sich grundsätzlich dieselben Wälzbewegungen beim Zerspanungsprozess, d.h. das Werkzeug arbeitet mit und ohne Spanflächenversatz. Allerdings entstehen aufgrund der Bahnbewegung des Werkzeuges relativ zum Werkstück zu jedem Zeitpunkt des Eingriffes andere Freiwinkel und Spanwinkel. Im ungünstigsten Fall können während des Schneideneingriffes Spanwinkel von -50° oder mehr entstehen, durch welche die Bearbeitungskräfte stark ansteigen, was letztendlich bei zwangsläufig auftretenden Schwingungsbewegungen zu nicht unerheblichen Fertigungsungenauigkeiten führen kann. Betrachtet man die Bahnbewegung im Bezugssystem des Werkstückes, so bewegt sich jeder Schneidenpunkt auf einer dreidimensionalen Zykloide. Bei Vernachlässigung des Achskreuzwinkels bzw. einem angenommenen Winkelwert von 0° sind die Bahnkurven bei der Außenbearbeitung eines Werkstückes Epizykloiden und bei der Innenbearbeitung Hypozykloiden. Das Übersetzungsverhältnis zwischen dem Werkzeug und dem Werkstück ist entscheidend über die Anzahl der Überrollungen des Werkzeuges bis zum Erreichen desselben Punktes nach einem 360°-Durchlauf.

Um zu verhindern, dass ein oder mehrere fehlerhafte Zähne des Werkzeuges zu entsprechenden Fehlern im fertig bearbeiteten Werkstück führen, wird die Anzahl der Zähne des Werkzeuges so gewählt, dass die Anzahl der Zähne des Werkstückes ein nicht ganzzahliges Vielfaches ist. Bei einem ganzzahligen Vielfachen würde nämlich die Situation entstehen, dass das Werkzeug beim Umlauf stets dieselbe Zahnlücke mit demselben Zahn bearbeitet, so dass geometrische Fehlgestaltungen eines "Schneidzahns" des Werkzeuges entsprechende Werkstückfehler verursachen. Es wird somit vorzugsweise ein Übersetzungsverhältnis ohne gemeinsamen Teiler oder mit einer Primzahl gewählt, d. h. z. B. von 100 Zähnen des Werkstückes zu 29 Zähnen des Werkzeuges.

Bei einem positiven Achskreuzwinkel werden aus ebenen Zykloiden räumliche Rollkurven, die zur Analyse der Bewegungsbahnen der Spanflächen des Werkzeuges verwendet werden können. Die Kinematik des Wälzschälens stellt sich als komplexe Bewegung dar, bei der jede Zahnschneide des Werkzeuges sukzessive in eine Zahnlücke des Werkstückes eintaucht und diese radiale Bewegung abrollend bis zum Zahngrund fortsetzt, wonach die Zahnschneide auf der gegenüberliegenden Wand der Zahnlücke wieder herausbewegt wird. Während des Eintauchens und des Herausbewegens bewegt sich die Werkzeug-Zahnschneide axial entlang der Werkstück-Zahnbreite. Der Spanwinkel ändert sich stetig und kann sogar hohe negative Werte von bis zu -50° annehmen. Bei solch hohen negativen Spanwinkeln werden die Werkzeuge durch die zunehmenden Schnittkräfte extrem belastet, was einen erheblichen Werkzeugverschleiß bewirken kann. Die Werkzeuge können zwar nachgeschliffen oder gegen neue Werkzeuge ausgetauscht werden, jedoch führen solche Arbeiten zu Stillstandszeiten in der Fertigung, welche die Effektivität des Prozesses minimieren. Bei konischen Werkzeugen kommt hinzu, dass die Anzahl der Nachschleifmöglichkeiten aufgrund des Konus beschränkt ist.

Ausgehend von diesen Erkenntnissen ist es Aufgabe der vorliegenden Erfindung, ein Verfahren zur Bestimmung der Freiflächenkontur eines Wälzschälwerkzeuges anzugeben, die eine werkzeugschonendere Schneidoperation mit höherer Produktivitätsrate gestattet. Diese Aufgabe wird durch ein Verfahren nach Anspruch 1 gelöst.

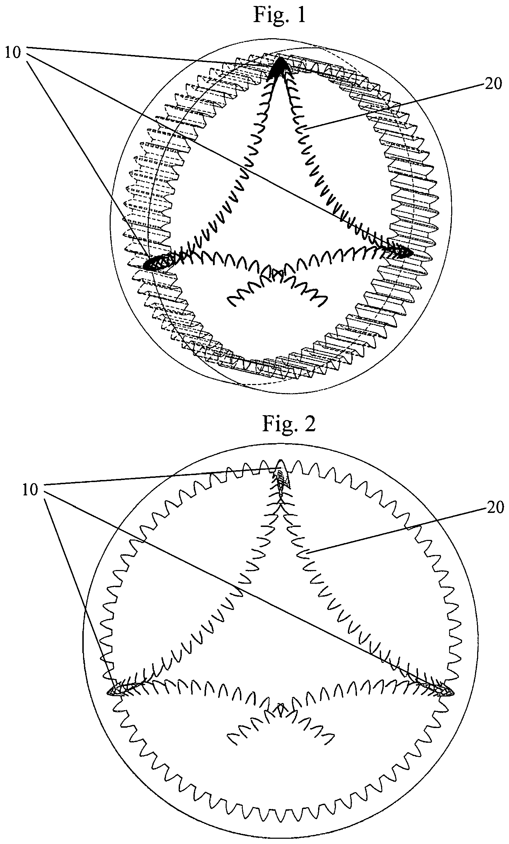

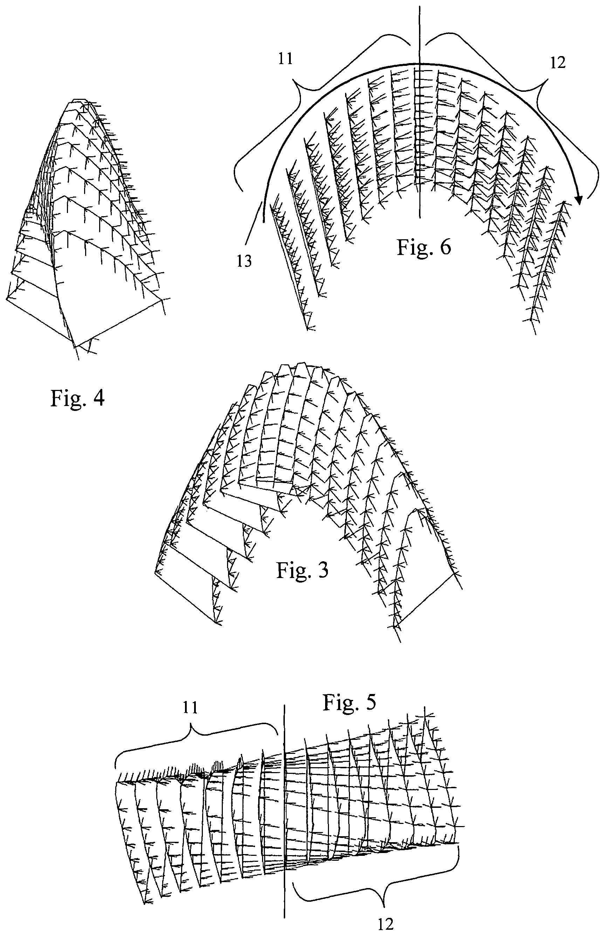

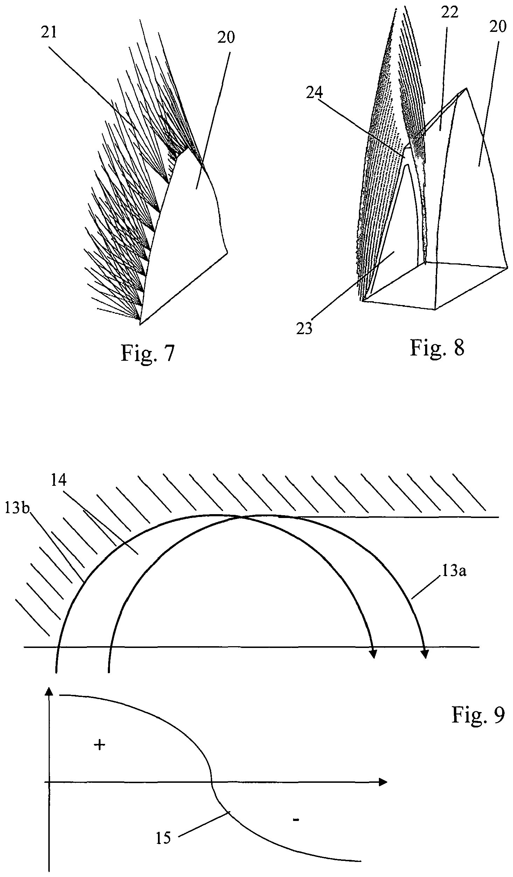

In Fig. 1 ist exemplarisch die räumliche Bewegung der Spanfläche 20 eines Werkzeugzahnes dargestellt. Das Werkzeug hat im gewählten Beispiel insgesamt 19 Zähne und das Werkstück 64 Zähne, woraus sich ein Übersetzungsverhältnis von 64/19 ergibt. Von besonderem Interesse sind die Eingriffsbereiche 10, in denen das Werkzeug zerspanend in das Werkstück, d. h. eine Werkstückzahnlücke eingreift. Fig. 2 zeigt eine Draufsicht parallel zur Werkstückachse auf die räumliche Bewegungskurve nach Fig. 1, worin die Eingriffsbereiche 10 jeweils spitzwinklig erscheinen. Wie aus der vergrößerten Ansicht nach Fig. 3, 4, 5 und 6 ersichtlich, die verschiedene Ansichten der Bahnbewegungen der Spanfläche eines Zahnes im Eingriffsbereich zeigen, ändert sich die Bahnkrümmung stetig während des Ein- und Austauchens des Werkzeugzahnes aus der Werkstück-Zahnlücke. Die im Eingriffsbereich annähernd radial orientierte Spanfläche schneidet das Werkstück beim Eintritt 11 in eine Zahnlücke unter einem positiven Spanwinkel, der sich bis zum Austritt 12 aus der Zahnlücke hin zu einem stark negativen Spanwinkel verändert. Zusätzlich ist in Fig. 6 ein Bahnbewegungsrepräsentant 13 eingetragen, der als gekrümmter Pfeil die Bewegungsbahn und Schnittrichtung repräsentiert. Wie insbesondere der in eine Ebene projizierten Ansicht in Fig. 7 zu entnehmen ist, ändert sich beim Durchlaufen einer Zahnlücke der jeden Punkt der aktiven Schneidkante, welche die Spanfläche begrenzt, zugeordnete Geschwindigkeitsvektor, der aus einem skalaren Betrag und der Bewegungsrichtung besteht. Zusätzlich ist in Fig. 6 ein Bahnbewegungsrepräsentant 13 eingetragen, der als gekrümmter Pfeil die Bewegungsbahn und Schnittrichtung darstellt. Für die vorliegende Erfindung ist die Richtungskomponente des Geschwindigkeitsvektors von besonderer Bedeutung. Trägt man, wie in Fig. 7 und 8 dargestellt, zu jedem Zeitpunkt des Eingriffs den orientierungsinvertierten Geschwindigkeitsvektor eines jeden Schneidkantenpunktes der Spanfläche auf, so erhält man eine Schar 21 von Geschwindigkeitsvektoren, die eine geschlossene Hüllfläche 22 bilden, innerhalb der keine Geschwindigkeitsvektoren liegen. Diese Hüllfläche, zuzüglich eines gewünschten Freiwinkels, der vorzugsweise zwischen 2° und 10° liegt, bestimmt die Freiflächenkontur des Werkzeugzahnes. In Fig. 8 ist im Abstand von ca. 5 mm von der Spanfläche 20 eine Fläche 23 eingezeichnet, die - abzüglich eines Randbereiches 24, der durch die Wahl des Freiwinkels bestimmt ist - der Basis des Schneidenzahnes eines Werkzeuges entspricht. Anders ausgedrückt, würde man die Hüllfläche 22 als Freifläche wählen, wäre der Freiwinkel 0°, was entsprechend zu einem positiven Freiwinkel zu korrigieren ist.

Das oben beschriebene Werkzeug ist aufgrund der gewählten Freiwinkel in der Lage radial auf volle Tiefe bzw. maximale Zustellung einzutauchen. Nach der Eintauchbewegung kann der Vorschub in der der Schnittbewegung entgegengesetzten Richtung erfolgen. Auf diese Weise wird der Eintritt des Werkzeugs im Eingriffsgebiet zur Zerspanung genutzt. In diesem Gebiet sind die effektiven Spanwinkel positiv.

In Fig. 9 sind zwei Werkzeugeingriffe in einer Werkstücklücke durch die Bewegungsrepräsentanten 13a und 13b dargestellt. Erfolgt der Vorschub wie in dieser Erfindung vorgeschlagen der Schnittbewegung entgegengesetzt, so repräsentieren 13a den ersten Eingriff und 13b den zweiten Eingriff in die Werkstücklücke. Das zerspante Volumen wird durch die Fläche 14 repräsentiert. Die Zerspanung erfolgt demnach beim Eintritt des Werkzeugzahns, wo die effektiven Spanwinkel positiv sind, was qualitativ durch den mittleren Spanwinkelverlauf 15 dargestellt wird.

Erfolgt der Vorschub in die gleiche Richtung wie die Schnittbewegung, wird das Austrittsgebiet des Werkzeugzahns zur Zerspanung genutzt und die Zerspanung erfolgt unter einem effektiv stark negativen Spanwinkel, was hohe Schnittkräfte und Anregungen im Prozess zur Folge hat. In der Praxis sind daher die erreichbaren Qualitäten und Werkzeugstandzeiten begrenzt.

Der wesentliche Vorteil der Erfindung liegt in der Verwendung des Bewegungsabschnitts während des Eingriffs, bei dem die Spanwinkel positiv sind. Gegenüber dem Stand der Technik kann bei dieser Prozessführung der Span leichter über die Spanfläche gleiten und es wird mehr Wärme über den Span abtransportiert. Damit wird auch Haftung des Spans auf der Spanfläche verringert.

Die vorstehenden Überlegungen gelten selbstverständlich auch für messerförmige Werkzeuge, die beispielsweise in der DE 20 2011 050 054 U1 beschrieben werden.

Das in Anspruch 1 beschriebene Verfahren lässt sich zur Bestimmung der Freiflächenkontur bei jedem Werkzeug, dessen Zahn- oder Messeranzahl vorgewählt wird, anwenden. Die grafische Darstellung der Bahnbewegung der Spanfläche des Werkzeugzahnes sowie die Ermittlung der jeweiligen Tangentialgeschwindigkeit eines jeden Schneidkantenpunktes ist über ein Rechenprogramm ohne großen Aufwand zu erstellen, woraus sich eine exakt konturierte Hüllkurve ergibt, die abzüglich des gewünschten Freiwinkels, eine geometrisch eindeutig bestimmte Freifläche ermitteln lässt. Die rechnergestützte Simulation der Bahnbewegungen einer Spanfläche, die im einfachsten Fall eben ausgebildet sein kann, ermöglicht eine Optimierung der Freiflächengeometrie und gleichzeitig eine Optimierung des Zerspanungsprozesses, in dem das Werkzeug so geführt wird, dass der Eintauchbereich des Werkzeugzahnes in die Werkstück-Zahnlücke zum Zerspanen genutzt wird. Das Werkzeug kann als Monoblock, d. h. als einstückiges Werkzeug oder als Baugruppe mit auswechselbaren Werkzeugen (Schneideinsätzen, Messern) ausgebildet sein. Das Werkzeug besteht vorzugsweise aus einem auf pulvermetallurgischem Weg hergestellter Werkzeugstahl oder einem Hartmetall, es arbeitet mit und ohne Spanflächenversatz und die herzustellenden Verzahnungen können Innen- und Außenverzahnungen, Gerad- und Schrägverzahnungen sein.

Je nach dem Werkstückmaterial und der gewählten Schnittoperation liegen die Freiwinkel vorzugsweise im Bereich von 3° bis 7°, um zu verhindern, dass der gewählte Keilwinkel zu klein wird, was die Bruchempfindlichkeit der Schneidkanten erhöhen würde.

Vorzugsweise liegt der absolute Spanwinkel zwischen +10° und -30°, wobei durch die Werkzeuganstellwinkel beim Zerspanen zumindest beim Eintauchen in eine Zahnlücke des Werkstückes der effektive Spanwinkel positiv ist.

Das Werkzeug zum Wälzschälen mit mehreren jeweils Spanflächen mit Schneidkanten und hieran angrenzenden Freiflächen aufweisenden Zähnen, die auf einem zylindrischen oder konischen Mantel angeordnet sind, wobei das Werkzeug um eine in radialer Abstandsrichtung von der Werkstückachse beabstandete Werkzeugachse drehend antreibbar ist und unter einem Achskreuzwinkel zwischen der Drehachse eines angetriebenen Werkstückes und seiner Drehachse im Wälzeingriff zustellbar ist, ist so gestaltet, dass durch die Schar der Tangentialgeschwindigkeitsvektoren jedes Schneidkantenpunktes eine geschlossene ringförmige Hüllfläche gebildet wird, innerhalb der keine Tangentialgeschwindigkeitsvektoren liegen und gegenüber der die Freifläche des jeweiligen Zahns um 2° bis 10°, vorzugsweise 3° bis 7°, geneigt ist. Die Anzahl der Zähne wird durch das Übersetzungsverhältnis bestimmt.

Vorzugsweise wird das genannte Werkzeug derart verwendet, dass die Schnittrichtung der Vorschubrichtung entgegengesetzt ist, ohne dass zuvor Zähne des Werkstückes mit in Schnittrichtung gerichteter Vorschubbewegung bearbeitet worden sind. Durch die Gestaltung der Freifläche, kann das Werkzeug beim Zerspanungsprozess auf die volle Tiefe des Werkstückzahns zugestellt und zurückgezogen werden. Auf diese Weise wird das Eintrittsgebiet des Werkzeugzahns zur Zerspanung genutzt. In diesem Gebiet sind effektive Spanwinkel positiv und damit die Zerspanungskräfte geringer als bei der Zerspanung unter Verwendung des Austrittsgebiets. Die Zerspanungskräfte und damit die Anregungen im Prozess sind so auf ein Minimum reduziert.

## Patentansprüche

1. Verfahren zur Bestimmung der Freiflächenkontur, insbesondere des Freiwinkels eines messerförmigen Werkzeuges oder Werkzahnes eines Werkzeuges zum Wälzschälen von Werkstücken, wobei
- in einem ersten Schritt unter Berücksichtigung eines vorgegebenen oder vorgebbaren Übersetzungsverhältnisses zwischen dem Werkzeug und dem Werkstück, das durch die jeweilige Anzahl der Zähne bestimmt ist, sowie der gewünschten Zahnquerschnittskontur des Werkstückes die Spanflächenkontur des Werkzeuges definiert und der Verlauf der Bahnbewegung der Spanfläche des Werkzeuges beim zerspanenden Wälzschälen errechnet wird und wobei
- in einem zweiten Schritt die Tangentialgeschwindigkeit eines jeden Punktes der Schneidkante des Werkzeuges beim zerspanenden Wälzschälen in Form von Vektoren ermittelt und die Richtungskomponenten der orientierungsinvertierten dieser Vektoren als Scharen zu jedem Punkt auf der Schneidkante grafgisch dargestellt werden und eine geschlossene Hüllfläche bestimmt wird, innerhalb der keine Vektoren liegen, und
- wobei diese Hüllfläche zuzüglich des gewünschten Freiwinkels als Form für die Werkzeugfreifläche oder Freifläche eines Werkzeugzahns gewählt wird.

2. Verfahren nach Anspruch 1, **dadurch gekennzeichnet, dass** der Freiwinkel zwischen 2° und 10°, vorzugsweise zwischen 3° und 7° gewählt wird.

3. Verfahren nach Anspruch 1 oder 2, **dadurch gekennzeichnet, dass** der gewählte absolute Spanwinkel zwischen +10° und-30° liegt, wobei durch die Werkzeuganstellwinkel beim Zerspanen zumindest beim Eintauchen in eine Zahnlücke des Werkstückes ein positiver effektiver Spanwinkel gewählt wird.

4. Verfahren zur Fertigung eines Werkzeuges als Monoblock oder als Baugruppe mit auswechselbaren Werkzeugen, bei denen die Freiflächenkontur nach einem Verfahren gemäß einem der Ansprüche 1 bis 3 bestimmt worden ist.

5. Verfahren nach Anspruch 4, **dadurch gekennzeichnet, dass** das Werkzeug aus einem auf pulvermetalogischem Weg hergestellten Werkzeugstahl oder einem Hartmetall gefertigt ist.

6. Verfahren nach Anspruch 4 oder 5, **dadurch gekennzeichnet, dass** der Freiwinkel 2° bis 10°, vorzugsweise 3° bis 7° beträgt.

## Claims

1. Method for determining the flank contour, in particular the clearance angle, of a blade-shaped tool or tool tooth of a tool for hob peeling workpieces, wherein
- in a first step, taking into account a specified or specifiable transmission ratio between the tool and the workpiece, which is determined by the respective number of teeth, as well as the desired tooth cross-sectional contour of the workpiece, the rake face contour of the tool is defined and the course of the path movement of the rake face of the tool during the hob peeling machining is calculated, and wherein
- in a second step, the tangential speed of each point on the cutting edge of the tool during hob peeling machining is ascertained in the form of vectors and the directional components of the orientation-inverted vectors are graphically represented as groups for each point on the cutting edge and a closed enveloping surface is determined, within which no vectors lie, and
- wherein this enveloping surface, in addition to the desired clearance angle, is selected as the shape for the tool flank or flank of a tool tooth.

2. Method according to claim 1, **characterised in that** the clearance angle is selected to be between 2° and 10°, preferably between 3° and 7°.

3. Method according to either claim 1 or claim 2, **characterised in that** the selected absolute rake angle is between +10° and -30°, a positive effective rake angle being selected as a result of the tool setting angle during machining, at least when dipping into a tooth gap of the workpiece.

4. Method for manufacturing a tool as a monoblock or as an assembly having interchangeable tools, in which the flank contour has been determined using a method according to any of claims 1 to 3.

5. Method according to claim 4, **characterised in that** the tool is made from a tool steel produced in a powder-metallurgical manner or from a hard metal.

6. Method according to claim 4 or claim 5, **characterised in that** the clearance angle is 2° to 10°, preferably 3° to 7°.

## Revendications

1. Procédé pour déterminer le contour de la face de dépouille, en particulier l'angle de dépouille d'un outil en forme de couteau ou d'une dent d'un outil pour le taillage par développante de pièces à usiner, dans lequel
- dans une première étape, en tenant compte d'un rapport de transmission prédéfini ou pouvant être prédéfini entre l'outil et la pièce à usiner, qui est déterminé par le nombre respectif de dents ainsi que du contour de section transversale de dent souhaité de la pièce à usiner, on définit le contour de la face de coupe de l'outil et on calcule l'allure du mouvement de trajectoire de la face de coupe de l'outil lors du taillage par développante par enlèvement de copeaux, et dans lequel
- dans une deuxième étape, on détermine la vitesse tangentielle de chaque point de l'arête de coupe de l'outil lors du taillage par développante par enlèvement de copeaux sous la forme de vecteurs et on représente graphiquement les composantes directionnelles de l'orientation inversée de ces vecteurs sous forme de faisceau par rapport à chaque point sur l'arête de coupe et on détermine une surface d'enveloppe fermée à l'intérieur de laquelle ne se trouve aucun vecteur, et
- dans lequel cette surface d'enveloppe plus l'angle de dépouille souhaité sont choisis comme forme pour la surface de dépouille de l'outil ou la surface de dépouille d'une dent de l'outil.

2. Procédé selon la revendication 1, **caractérisé en ce que** l'angle de dépouille est choisi entre 2° et 10°, de préférence entre 3° et 7°.

3. Procédé selon la revendication 1 ou 2, **caractérisé en ce que** l'angle de coupe absolu choisi est compris entre +10° et -30°, dans lequel un angle de coupe effectif positif est choisi au moyen des angles d'attaque de l'outil lors de l'enlèvement de copeaux au moins lors de la plongée dans un entredent de la pièce à usiner.

4. Procédé de fabrication d'un outil sous une forme monobloc ou sous la forme d'un ensemble d'outils interchangeables dont le contour de la face de dépouille a été déterminé par un procédé selon l'une des revendications 1 à 3.

5. Procédé selon la revendication 4, **caractérisé en ce que** l'outil est fabriqué à partir d'un acier à outils obtenu par un procédé de métallurgie des poudres ou à partir d'un métal dur.

6. Procédé selon la revendication 4 ou 5, **caractérisé en ce que** l'angle de dépouille est de 2° à 10°, de préférence de 3° à 7°.
